# EUROPEAN PATENT SPECIFICATION

(11) **EP 1 480 509 B1**
(45) Date of publication and mention of the grant of the patent: **04.02.2009**
(21) Application number: 02701480.2
(22) Date of filing: 25.02.2002
(51) Int. Cl.: A01G 13/02

(54) **GROUND COVER FOR CULTIVATION OF PLANTS**
BODENBEDECKUNG FÜR PFLANZENKULTUR
CULTURE DE PLANTES

(43) Date of publication of application: 01.12.2004
(73) Proprietor: Nieuwoudt, Gert Johannes Van Taak, 8135 Clanwilliam (ZA)
(72) Inventor: Nieuwoudt, Gert Johannes Van Taak, 8135 Clanwilliam (ZA)
(74) Representative: Grünecker, Kinkeldey, Stockmair & Schwanhäusser Anwaltssozietät
(86) International application number: PCT/IB2002/000541
(87) International publication number: WO 2002/067661

(56) References cited:
- EP-A- 0 661 406
- US-A- 3 888 418
- US-A- 4 175 496
- US-A- 4 399 763

## Description

THIS INVENTION relates to cultivation of plants. In particular, it relates to a tentacled plant anchor and ground cover for improving harvest yield of tentacled plants and to a method of improving harvest yield for tentacled plants by providing tentacle anchoring formations for the tentacled plants.

The Applicant is aware of US 3 888 418 which relates to a mulch comprising an open-mesh knitted fabric into which insert strips of paper, metal, plastic or other material, are incorporated. Different types of knitting yarn may be employed for the mesh, depending on the intended purpose. Irrigation tubes and/or seed tapes may also be incorporated into the fabric. The fabric is configured to degrade enough to allow full development of vegetation and to provide permanent erosion control.

The applicant is also aware of EP 0 661 406 which relates to a vegetation mat for use in growing plants on the face of a slope. The vegetation mat includes a front sheet and a back sheet, which are coupled to each other thereby to wrap vegetation material inbetween, as well as a net provided on part of the front sheet, the net having meshes to permit the growth of vegetation seeds. The front and back sheets are degradable to allow the vegetation material to contact the face of the slope. When the front sheet is partly or entirely decomposed the freezing or flowing away of vegetation material is prevented by the net.

According to one aspect of the invention, there is provided a tentacled plant anchor and ground cover for improving harvest yield of tentacled plants, the tentacled plant anchor and ground cover including
a water-impervious membrane strip of a synthetic plastics material having a side which in use is an upper side on which a growing tentacled plant can be supported; and
tentacle anchoring formations on the upper side of the membrane strip for assisting a tentacled plant in the vicinity of the tentacled plant anchor and ground cover to anchor itself thereto, the tentacle anchoring formations allowing plant tentacles to grow inbetween the tentacle anchoring formations and the membrane strip.

The membrane strip may be light impervious, at least to some degree, as required. Typically, the membrane strip is of polyethylene material. The membrane strip may be of conventional agricultural sheeting, e.g. any of the membranes or sheets supplied by Polyon Agricultural Sheeting of Kibbutz Barkai, M.P. Menashe 37860 Israel.

The membrane strip may have a thickness of between about 15 µm and about 40 µm, typically between about 15 µm and about 37 µm, e.g. about 20 µm.

The membrane strip may have a length of at least 500m, typically at least 1000 m, e.g. about 1000 m.

The membrane strip may have a width of between about 0.5 m and about 2.5 m, typically between about 1 m and about 1.5 m, e.g. about 1,2 m.

The tentacle anchoring formations may be defined by a net which is located on the upper side of the membrane strip. The net may be attached, e.g. adhesively attached or physically connected such as by means of a temperature and/or pressure process when the net is also of synthetic plastics material, as described hereinafter, to the membrane strip at a plurality of spaced locations, allowing the net to be displaceable away from the membrane strip, in areas where the net is not attached to the membrane strip. Typically, the net is attached to the membrane strip along two longitudinally extending zones. Each zone may have a width of between about 2 cm and about 25 cm, typically between about 5 cm and about 15 cm, e.g. about 10 cm. Typically, the longitudinally extending zones are adjacent respective longitudinally extending edges of the membrane strip, leaving a central, longitudinally extending zone of the net displaceable away from the membrane strip.

Apertures defined by the net may be rectangular. Major sides of each rectangular aperture may extend longitudinally relative to the membrane strip.

Each aperture defined by the net may have a length of between about 2.5 cm and about 15 cm, typically between about 5 cm and about 10 cm, e.g. about 8 cm.

Each aperture defined by the net may have a width of between about 1.5 cm and about 15 cm, typically between about 2.5 cm and about 10 cm, e.g. about 8 cm.

The net may be of a synthetic plastics or polymeric material, e.g. polyethylene or polypropylene. Preferably, the net is of a material which is UV-stabilised.

The net may be of strands having a thickness of between about 0.2 mm and about 3 mm, typically between about 0.3 mm and about 0.5 mm, e.g. about 0.45 mm.

The membrane strip may define at least one aperture therethrough for receiving a plant. Thus, in use, a plant typically grows through the aperture in the membrane strip and anchors itself to the tentacled plant anchor and ground cover.

The membrane strip may define a plurality of longitudinally spaced apertures. The apertures may be equidistantly spaced and may be located on a longitudinally extending centre line of the membrane strip. Although the tentacled plant anchor and ground cover may be supplied in the trade with the apertures, it is to be appreciated that it may be more convenient for a user of the tentacled plant anchor and ground cover simply to punch or tear holes in the membrane strip in the number and locations required by the user.

The tentacled plant anchor and ground cover may be in the form of a roll, comprising a ply consisting of the membrane strip and another ply consisting of the tentacle anchoring formations.

According to another aspect of the invention, there is provided a method of improving harvest yield for tentacled plants by providing tentacle anchoring formations for the tentacled plants, the method including
laying a tentacled plant anchor and ground cover as hereinbefore described on a strip of ground;
securing the tentacled plant anchor and ground cover to the ground; and
planting tentacled plants or their seed through apertures in the membrane strip so that tentacled plants growing through the apertures can anchor themselves to the tentacle anchoring formations on top of the membrane strip.

Laying the tentacled plant anchor and ground cover may include unrolling the membrane strip and the tentacle anchoring formations from a roll, comprising a ply of the membrane strip and a ply of the tentacle anchoring formations.

Securing the tentacled plant anchor and ground cover to the ground may include securing longitudinally extending zones adjacent respective longitudinally extending edges of the tentacled plant anchor and ground cover to the ground. This may be effected by temporarily holding down a portion of an edge on the ground and piling soil onto the held-down portion of the edge.

The method may include providing a tunnel or shelter over the tentacled plant anchor and ground cover.

According to a further aspect of the invention, there is provided a method of improving harvest yield for tentacled plants by providing tentacle anchoring formations for the tentacled plants, the method including
laying a membrane strip of a synthetic plastics material having a side which in use is an upper side on a strip of ground;
laying tentacle anchoring formations on the upper side of the membrane strip;
securing the membrane strip and the tentacle anchoring formations to the ground; and
planting tentacled plants or their seed through apertures in the membrane strip so that tentacled plants growing through the apertures can anchor themselves to the tentacle anchoring formations on top of the membrane strip.

The membrane strip and the tentacle anchoring formations may be laid on the ground simultaneously, and may be as hereinbefore described.

The method may include providing a roll, comprising a ply of the membrane strip and a ply of tentacle anchoring formations, and unrolling the membrane strip and the tentacle anchoring formations simultaneously to lay them simultaneously on the ground.

Securing the membrane strip and the tentacle anchoring formations to the ground may include securing longitudinally extending zones adjacent respective longitudinally extending edges of the membrane strip and a body defining the tentacle anchoring formations to the ground. This may be effected by temporarily holding down a portion of an edge of both of the membrane strip and the tentacle anchoring formations and piling soil onto the held-down portions of the edges.

The method may include providing a tunnel or shelter over the membrane strip and the tentacle anchoring formations.

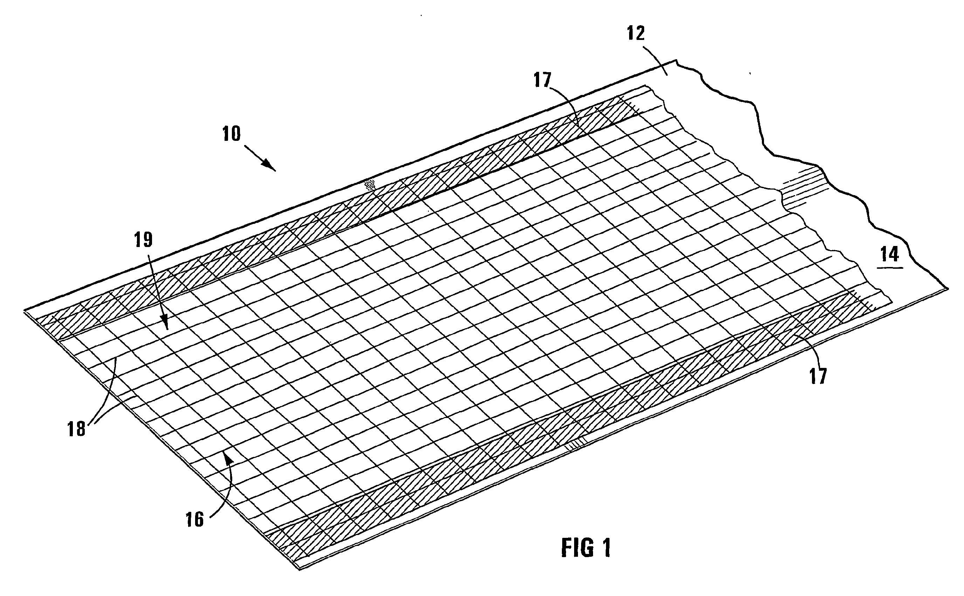

The invention will now be described, by way of example, with reference to the accompanying diagrammatic drawings, in which
Figure 1 shows a three-dimensional view of a portion of a tentacled plant anchor and ground cover in accordance with the invention; and
Figure 2 shows a three-dimensional view of the portion of the tentacled plant anchor and ground cover of Figure 1, in use.

Referring to the drawings, reference numeral 10 generally indicates a ground cover in accordance with the invention, only a portion of which is shown. The ground cover 10 includes a membrane strip 12 with a side 14 which in use is an upper side, and a net 16, the strands 18 of which define anchoring formations.

The net 16 is located on and covers the upper side 14 of the membrane strip 12. Two longitudinally extending, ten cm wide edge portions of the net 16 are adhesively attached to similar edge portions 17 of the membrane strip 12. Thus, a longitudinally extending central area or zone of the net 16 is not directly attached to the membrane strip 12, but only by means of the edge portions. The central area or zone is thus free to move away, at least to a limited extent, from the membrane strip 12, allowing plant tentacles to grow inbetween the net 16 and the membrane strip 12.

The membrane strip 1 2 is water impervious and light impervious, and is of polyethylene material. It has a thickness of about 20 µm, a width of about 1,2 m and a length of about 1000 m.

Rectangular apertures or rectangular blocks 19 defined by the net 16 each has a length of about 8 cm and a width of about 8 cm. The net 16 is arranged relative to the membrane strip 1 2 such that the apertures or blocks 19 defined by the net 16 have their shorter sides transverse to the membrane strip 12.

The net 16 is of polyethylene or polypropylene material. A typical example of a suitable net 16 is a net supplied under the trade name Netlon Palnet, available from African Commerce Developing Company (Proprietary) Limited of Dacres Avenue, Epping 2, Eppingdust, Cape Town, Republic of South Africa.

The ground cover 10 is supplied in the form of a two-ply roll (not shown), one ply consisting of the membrane strip 12 and the other ply consisting of the net 16.

In another embodiment of the invention, instead of the edge portions of the net 16 being adhesively attached to the edge portions 17 of the membrane strip, the edge portions of the net may be physically attached to the edge portions of the membrane strip, such as by means of a high temperature and/or high pressure process e.g. by means of welding.

In use, the ground cover 10 is laid on the ground by unrolling the membrane strip 12 and the net 16 from the two-ply roll. Typically, the ground cover 10 is laid over a linearly extending ridge or hump, with a centre line of the ground cover 10 being located on a longitudinally extending centre line of the ridge or hump. Typically, an irrigation pipe or the like (not shown) is located underneath the membrane strip 12 but, as will be appreciated, the exact arrangement may depend on the kind of plants for which the ground cover 10 is intended to be used.

The ground cover 10 may be laid using a conventional machine for the laying of conventional ground covers for the cultivation of plants. Thus, the unrolling membrane strip 12 and net 16 may be temporarily held down by a pair of spaced wheels pressing down on the edge portions 17, whilst ploughshares may throw two rows 20 of soil onto the edge portions 17.

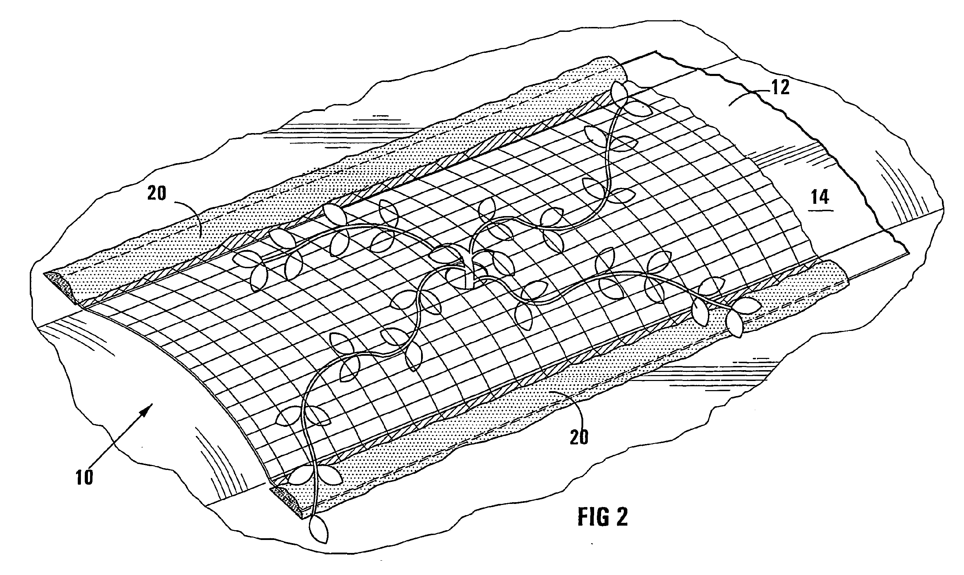

A plurality of apertures (only one of which is shown) is formed in the membrane strip 12, by simply pushing holes through the membrane strip 12. The apertures are typically located on the centre line of the membrane strip 12 and are spaced a desired distance from each other. Plants to be cultivated are then planted, one in each aperture. Typically, the ground cover 10 is used for plants with tentacles, such as watermelon or cantaloupe. The plants growing through the apertures find it easy to attach or anchor themselves to the net 16, as shown in Figure 2 of the drawings.

The use of a ground cover, comprising only a membrane strip, is known to the applicant. Membrane strip ground covers have a number of advantages, including that fruit ripens earlier and more evenly, fruit can be harvested over a longer period, and less chemical pest control is required. By also supplying anchoring formations on the upper side of the membrane strip, thereby assisting cultivated plants to anchor themselves to the ground cover 10, the ground cover 10, as illustrated, also provides the following advantages: due to the anchoring of tentacles of the plant, wind damage to the plant is reduced; plants are less acceptable to fungi, infections and stress when they are less disturbed; immature fruits are not moved about, which reduces abrasions and loss of fruit; natural wind breaks are sufficient to prevent wind damage to the plants and fruit and it is thus not necessary to erect artificial windbreaks, lowering input capital; the net 16 strengthens the membrane strip 12, inhibiting wind damage to the membrane strip 12 and thus allowing thinner membrane strips to be used and use of the ground cover 10 for a second harvest during the same season; and more mature fruit is produced per hectare, leading to higher nett income per hectare.

Some of the abovementioned advantages are illustrated by the following results from experiments conducted by the applicant.

### EXPERIMENT 1

An experiment was conducted at Ou Tuin, Doringrivier, District Clanwilliam in South Africa to investigate the effect of the invention on the cultivation of watermelon and cantaloupe compared to other ground treatment strategies. This area is subject to wind damage of plants. The watermelon variety used was Carmen and the cantaloupe variety used was Aphrodite. The membrane used with the watermelon was a brown plastics sheet, whereas the membrane used with the cantaloupe was a black plastics sheet. Observations on the leaf growth were made 8 weeks (Table 1) and 10 weeks (Table 2) after planting. The Tables show the number of fully grown permanent leaves per plant. Data for each repeat shows the average for 17 plants.

**TABLE 1**

| | ***WATERMELON*** | | | | ***CANTALOUPE*** | | | |
|---|---|---|---|---|---|---|---|---|
| | **Repeat 1** | **Repeat 2** | **Repeat 3** | **Average** | **Repeat 1** | **Repeat 2** | **Repeat 3** | **Average** |
| Bare ground | 3.82 | 3.94 | 3.31 | 3.69 | 0.42 | 0.62 | 0.49 | 0.51 |
| Plastics sheet | 5.29 | 5.23 | 4.38 | 4.97 | 1.52 | 1.64 | 1.65 | 1.60 |
| Plastics sheet + net | 4.29 | 4.67 | 4.00 | 4.32 | 1.51 | 1.18 | 1.57 | 1.42 |
| Plastics sheet + tunnel | 12.18 | 14.00 | 11.43 | 12.54 | 3.24 | 2.58 | 2.26 | 2.69 |
| Plastics sheet + net + tunnel | 10.17 | 13.06 | 12.81 | 12.01 | 2.59 | 3.05 | 2.54 | 2.73 |

**TABLE 2**

| | ***WATERMELON*** | | | | ***CANTALOUPE*** | | | |
|---|---|---|---|---|---|---|---|---|
| | **Repeat 1** | **Repeat 2** | **Repeat 3** | **Average** | **Repeat 1** | **Repeat 2** | **Repeat 3** | **Average** |
| Bare ground | 12.41 | 8.36 | 11.75 | 10.84 | 4.64 | 4.47 | 4.00 | 4.37 |
| Plastics sheet | 30.12 | 24.94 | 21.94 | 25.67 | 8.50 | 8.73 | 9.13 | 8.79 |
| Plastics sheet + net | 31.33 | 29.29 | 24.28 | 28.37 | 7.69 | 7.00 | 10.53 | 8.41 |
| Plastics sheet + tunnel | 66.00 | 76.00 | 69.00 | 70.33 | 18.62 | 19.25 | 18.29 | 18.72 |
| Plastics sheet + net + tunnel | 83.00 | 74.00 | 65.00 | 74.00 | 18.13 | 20.23 | 23.23 | 20.53 |

It is clear from Tables 1 and 2 that initial growth of leaves is strongest inside the tunnel and it was markedly stronger for watermelon than cantaloupe, possibly because the watermelon was established from plants, whereas the cantaloupe was established from seed. The plastics sheet, with and without the net, also had a significant effect on the number of fully grown leaves, compared to bare ground only, as shown by Tables 1 and 2. After 10 weeks, the use of a plastics sheet in combination with the net, for watermelon, showed improved results compared to the use of a plastics sheet only. It appeared that the most prominent advantage of the use of the net with the plastics sheet is not to increase the number of leaves per plant, but rather to improve the effectiveness of the leaves. This can possibly be explained by the fact that anchoring of the tentacles of the plants to the net has the effect that the leaves can maintain a fixed orientation relative to the sun in contrast with unanchored plants which are subject to continual movement by the wind, causing changes in orientation of the leaves relative to the sun. Leaves are often turned upside down so that the leaf stems have to recompensate for incorrect orientation of the leaves relative to the sun. This problem is particularly severe on smooth plastics sheets. After 10 weeks, the number of tentacles per plant anchored to the net was 8 for watermelon and 0.46 for cantaloupe. This difference can possibly again be explained by the fact that the cantaloupe was established from seed whereas the watermelon was established from plants.

Measurements were also taken to determine the effect of the different ground treatment strategies on the fruit-bearing capacity of the watermelon and the cantaloupe. The results are shown in Table 3 and indicate the number of fruits per plant after about 14.weeks. For cantaloupe, fruits larger than 8 cm were counted and for watermelon, fruits larger than 15 cm in length were counted. The values given are the average of 17 plants. Table 4 shows the results (number of fruits/plant) after about 20 weeks.

**TABLE 3**

| | ***WATERMELON*** | | | | ***CANTALOUPE*** | | | |
|---|---|---|---|---|---|---|---|---|
| | **Repeat 1** | **Repeat 2** | **Repeat 3** | **Average** | **Repeat 1** | **Repeat 2** | **Repeat 3** | **Average** |
| Bare ground | 0.58 | 0.44 | 0.40 | 0.47 | 0.50 | 0.46 | 0.56 | 0.51 1 |
| Plastics sheet | 0.82 | 0.41 | 0.53 | 0.59 | 1.88 | 1.60 | 1.94 | 1.81 |
| Plastics sheet + net | 0.94 | 1.06 | 0.88 | 0.96 | 1.93 | 1.47 | 2.53 | 1.98 |
| Plastics sheet + tunnel | 1.35 | 0.94 | 1.00 | 1.10 | 1.63 | 1.94 | 2.13 | 1.90 |
| Plastics sheet + net + tunnel | 1.18 | 1.38 | 1.05 | 1.20 | 2.11 | 2.53 | 2.06 | 2.23 |

**TABLE 4**

| | ***WATERMELON*** | | | | ***CANTALOUPE*** | | | |
|---|---|---|---|---|---|---|---|---|
| | **Repeat 1** | **Repeat 2** | **Repeat 3** | **Average** | **Repeat 1** | **Repeat 2** | **Repeat 3** | **Average** |
| Bare ground | 1.07 | 1.00 | 1.00 | 1.02 | 1.56 | 1.53 | 1.75 | 1.61 |
| Plastics sheet | 1.06 | 1.06 | 1.00 | 1.04 | 2.31 | 2.29 | 2.38 | 2.33 |
| Plastics sheet + net | 1.13 | 1.18 | 1.25 | 1.19 | 2.71 | 2.67 | 2.65 | 2.67 |
| Plastics sheet + tunnel | 1.00 | 1.24 | 1.18 | 1.14 | 2.44 | 2.31 | 2.44 | 2.40 |
| Plastics sheet + net + tunnel | 1.42 | 1.41 | 1.20 | 1.34 | 2.73 | 2.75 | 2.76 | 2.75 |

It is clear that the combination of the plastics sheet with the net has a marked effect on the fruit-bearing capacity of both watermelon and cantaloupe, particularly in combination with a tunnel, particularly when compared to bare ground.

Table 5 illustrates the effect of the ground treatment method on average fruit diameter (in mm) after about 20 weeks.

**TABLE 5**

| | ***WATERMELON*** | | | | ***CANTALOUPE*** | | | |
|---|---|---|---|---|---|---|---|---|
| | **Repeat 1** | **Repeat 2** | **Repeat 3** | **Average** | **Repeat 1** | **Repeat 2** | **Repeat 3** | **Average** |
| Bare ground | 165.06 | 169.36 | 163.63 | 166.02 | 130.84 | 130.13 | 126.03 | 129.00 |
| Plastics sheet | 171.25 | 169.33 | 176.00 | 172.19 | 131.28 | 141.29 | 142.63 | 138.40 |
| Plastics sheet + net | 169.08 | 179.50 | 176.92 | 175.17 | 139.13 | 136.88 | 138.81 | 138.27 |
| Plastics sheet + tunnel | 180.08 | 171.76 | 176.20 | 176.01 | 136.20 | 137.50 | 140.75 | 138.15 |
| Plastics sheet + net + tunnel | 184.70 | 217.12 | 184.00 | 195.27 | 137.94 | 137.09 | 139.10 | 138.04 |

As can be seen, for watermelon there was enough variation in fruit size in order to, in addition to fruit-bearing capacity, affect the mass of harvested fruit. For cantaloupe, this variation was relatively small and it is thus the fruit-bearing capacity in the case of cantaloupe which will have the largest effect on the yield of the cantaloupe harvest.

The effect of the ground treatment method on harvest yield was calculated (in tons per hectare). The following factors were used in calculating yields: the number of fruits for watermelon was limited to fruits longer than 15 cm, and for cantaloupe to fruits longer than 8 cm for one trial row of 17 trial plants per planting. Average fruit diameter is calculated as the sum of the length diameter and the width diameter divided by two for 16 fruits from one representative trial row per planting. The calculated weight per fruit was determined by weighing 1 5 fruits over the whole range of fruit sizes and preparing a graph of the relationship of the average fruit diameter against the average fruit weight. Calculated harvest yield per hectare was then calculated as follows: number of fruits per plant after 20 weeks multiplied by the calculated average weight per fruit multiplied by 10000 plants per hectare divided by 1000, to give calculated harvest yield in ton per hectare. The results are shown in Table 6 below.

**TABLE 6**

| | ***WATERMELON*** | | | | ***CANTALOUPE*** | | | |
|---|---|---|---|---|---|---|---|---|
| | **Average fruit diameter (mm)** | **Calculated fruit mass per fruit (kg)** | **Number of fruit per plant** | **Calculated harvest yield (ton/ha)** | **Average fruit diameter (mm)** | **Calculated fruit mass per fruit (kg)** | **Number of fruit per plant** | **Calculated harvest yield (ton/ha)** |
| Bare ground | 166.02 | 3.79 | 1.02 | 38.66 | 129.00 | 1.22 | 1.61 | 19.64 |
| Plastics sheet | 172.19 | 4.21 | 1.04 | 43.78 | 138.40 | 1.48 | 2.33 | 34.48 |
| Plastics sheet + net | 175.17 | 4.38 | 1.19 | 52.12 | 138.27 | 1.47 | 2.67 | 39.24 |
| Plastics sheet + tunnel | 176.01 | 4.46 | 1.14 | 50.84 | 138.15 | 1.46 | 2.40 | 35.04 |
| Plastics sheet + net + tunnel | 195.27 | 6.18 | 1.34 | 82.81 | 138.04 | 1.47 | 2.75 | 40.43 |

It is clear from Table 6, that the use of the net with a plastics sheet (with or without the use of a tunnel), has markedly improved calculated harvest yields for both watermelon and cantaloupe, compared to bare ground and the use of a plastics sheet only. This is probably a reflection of the negative effects of wind damage in the area where the trials were conducted and the ability of the net to limit wind damage. The use of plastics sheeting alone improved calculated harvest yield for watermelon by only 13.2 %, compared to 75.6 % for cantaloupe. It is suspected that an unidentified factor in the form of a harmful organism infestation affected the watermelon covered by the plastics sheet only, causing the watermelon not to reach its full potential.

Observations were made to determine the effect of the different ground treatment strategies on the possibility of an early harvest. The results are shown in Table 7 below, which indicates the number of fruit that ripened first per trial row of 17 plants, after about 20 weeks.

**TABLE 7**

| | ***WATERMELON*** | | | | ***CANTALOUPE*** | | | |
|---|---|---|---|---|---|---|---|---|
| | **Repeat 1** | **Repeat 2** | **Repeat 3** | **Average** | **Repeat 1** | **Repeat 2** | **Repeat 3** | **Average** |
| Bare ground | 4 | 3 | 1 | 2.7 | 0 | 0 | 0 | 0.0 |
| Plastics sheet | 8 | 6 | 8 | 7.3 | 0 | 0 | 0 | 0.0 |
| Plastics sheet + net | 9 | 15 | 8 | 10.7 | 0 | 0 | 0 | 0.0 |
| Plastics sheet + tunnel | 12 | 15 | 12 | 13.0 | 2 | 1 | 2 | 1.7 |
| Plastics sheet + net + tunnel | 21 | 19 | 13 | 17.7 | 2 | 4 | 1 | 2.3 |

The improvement when using plastics sheet combined with a net in respect of watermelon is very clear from Table 7. For cantaloupe, the improvement is also marked when a plastics sheet, a net and a tunnel are used, compared to bare ground. It was also observed that surface damage of young fruit as a result of movement caused by wind was at least 50 % higher for those ground treatments strategies which did not include a net, for both watermelon and cantaloupe.

### EXPERIMENT 2

An experiment was conducted to determine the effect of the colour of the plastics sheet on the growth rate of watermelon and cantaloupe. Measurements of the number of fully grown permanent leaves in one row of 30 plants were taken after 8 weeks and 10 weeks. Each planting consisted of 100 plants. The results are shown in the following Table 8.

**TABLE 8**

| | ***WATERMELON*** | | ***CANTALOUPE*** | |
|---|---|---|---|---|
| | **8 weeks** | **10 weeks** | **8 weeks** | **10 weeks** |
| Black plastics sheet | 4.03 | 18.67 | 1.36 | 7.13 |
| Brown plastics sheet | 4.42 | 22.19 | 1.74 | 9.07 |

It is clear that, after 10 weeks, stronger stimulation of growth occurred underneath the brown plastics sheet than the black plastics sheet for both watermelon and cantaloupe. At this stage, there were 18.9 % more fully grown leaves under the brown plastics sheet for watermelon and 27.2 % more fully grown leaves for the cantaloupe.

The effect of the colour of the plastics sheet on calculated harvest yield was calculated. Calculations were done on the same basis as for Table 6, although fruit size measurements were taken for 100 plants for both watermelon and cantaloupe. The results are reflected below in Table 9.

**TABLE 9**

| | ***WATERMELON*** | | | | ***CANTALOUPE*** | | | |
|---|---|---|---|---|---|---|---|---|
| | **Number of fruit per plant (8 weeks)** | **Number of fruit per plant (20 weeks)** | **Calculated fruit mass per fruit (kg)** | **Calculated harvest yield (ton/ha)** | **Number of fruit per plant (8 weeks)** | **Number of "fruit per plant (20 weeks)** | **Calculated fruit mass per fruit (kg)** | **Calculated harvest yield (ton/ha)** |
| Black plastics sheet | ---- | ---- | ---- | ---- | 0.96 | 1.57 | 1.35 | 21.20 |
| Brown plastics sheet | ---- | ---- | ---- | ---- | 1.21 | 2.15 | 1.41 | 30.32 |
| Black plastics sheet | 0.91 | 1.08 | 6.44 | 69.55 | ---- | ---- | ---- | ---- |
| Brown plastics sheet | 1.08 | 1.34 | 6.47 | 86.70 | 1.97 | 2.42 | 1.54 | 37.26 |

### EXPERIMENT 3

The purpose of this experiment was to determine the effect of the ground treatment strategies on sand blasting damage of young plants of Honey Chow cantaloupe cultivar. The plants were planted in such a manner that from repeat 1 to repeat 3 the plants were progressively more exposed to wind blown sand. This effect was promoted by judicious use of a reed windbreak. The following Table 10 illustrates the results 3 weeks and 5 weeks after planting.

**TABLE 10**

| | ***Percentage surviving plants in planting*** | | | |
|---|---|---|---|---|
| | **Repeat 1** | **Repeat 2** | **Repeat 3** | **Average** |
| Bare ground | 73.3 - 73.0 | 58.8 - 10.6 | 18.8 - 8.2 | 50.3 - 30.6 |
| Brown plastics sheet | 55.5 - 56.0 | 55.7 - 56.0 | 46.6 - 28.3 | 52.6 - 46.7 |
| Plastics sheet + net | 72.0 - 72.0 | 72.2 - 72.1 | 52.2 - 28.2 | 65.5 - 57.4 |
| Average | 65.2 - 65.3 | 64.2 - 52.4 | 40.8 - 22.4 | 56.7 - 46.6 |

The positive effect of the use of a plastics sheet in combination with a net is clearly illustrated in Table 10. It was further observed that, where a plastics sheet was used without a net, the wind eroded soil from the edges of the sheet with the result that the plastics sheet was torn and blown to one side, particularly in respect of repeat 3. This problem did not occur where the plastics sheet was used in combination with the net, as the wind did not erode the soil from the net allowing the net to anchor the plastics sheet.

## Claims

1. A tentacled plant anchor and ground cover for improving harvest yield of tentacled plants, the tentacled plant anchor and ground cover including
a water-impervious membrane strip of a synthetic plastics material having a side which in use is an upper side on which a growing tentacled plant can be supported; and
tentacle anchoring formations on the upper side of the membrane strip for assisting a tentacled plant in the vicinity of the tentacled plant anchor and ground cover to anchor itself thereto, the tentacle anchoring formations allowing plant tentacles to grow inbetween the tentacle anchoring formations and the membrane strip.

2. A tentacled plant anchor and ground cover as claimed in claim -1, in which the membrane strip has a thickness of between about 15 µm and about 40 µm, and a length of at least 500m.

3. A tentacled plant anchor and aground cover as claimed in any one of the preceding claims, in which the membrane strip has a width of between about 0.5 m and about 2.5 m,

4. A tentacled plant anchor and ground cover as claimed in any one of the preceding claims, in which the tentacle anchoring formations are defined by a net located on the upper side of the membrane strip.

5. A tentacled plant anchor and ground cover as claimed in claim 4, in which the net is attached to the membrane strip at a plurality of spaced locations, allowing the net to be displaceable away from the membrane strip, in areas where the net is not attached to the membrane strip.

6. A tentacled plant anchor and ground cover as claimed in any one of the preceding claims, in which the membrane strip defines at least one aperture therethrough for receiving a plant.

7. A tentacled plant anchor and ground cover as claimed in any one of the preceding claims, which is in the form of a roll, comprising a ply consisting of the membrane strip and another ply consisting of the tentacle anchoring formations.

8. A method of improving harvest yield for tentacled plants by providing tentacle anchoring formations for the tentacled plants, the method including
laying a tentacled plant anchor and ground cover as claimed in any one of the preceding claims on a strip of ground;
securing the tentacled plant anchor and ground cover to the ground; and
planting tentacled plants or their seed through apertures in the membrane strip so that tentacled plants growing through the apertures can anchor themselves to the tentacle anchoring formations on top of the membrane strip.

9. A method as claimed in claim 8, in which laying the tentacled plant anchor and ground cover includes unrolling the membrane strip and the tentacle anchoring formations from a roll, comprising a ply of the membrane strip and a ply of the tentacle anchoring formations.

10. A method as claimed in claim 8 or claim 9, in which securing the ground cover to the ground includes securing longitudinally extending zones adjacent respective longitudinally extending edges of the tentacled plant anchor and ground cover to the ground.

11. A method as claimed in any one of claims 8 to 10 inclusive, which includes providing a tunnel or shelter over the tentacled plant anchor and ground cover.

12. A method of improving harvest yield for tentacle plants by providing tentacle anchoring formations for the tentacled plants, the method including
laying a membrane strip of a synthetic plastics material having a side which in use is an upper side on a strip of ground;
laying tentacle anchoring formations on the upper side of the membrane strip:
securing the membrane strip and the tentacle anchoring formations to the ground: and
planting tentacled plants or their seed through apertures in the membrane strip so that tentacled plants growing through the apertures can anchor themselves to the tentacle anchoring formations on top of the membrane strip.

13. A method as claimed in claim 12, which includes providing a roll, comprising a ply of the membrane strip and a ply of tentacle anchoring formations, and unrolling the membrane strip and the tentacle anchoring formations simultaneously to lay them simultaneously on the ground.

14. A method as claimed in claim 12 or claim 13, in which securing the membrane strip and the tentacle anchoring formations to the ground includes securing longitudinally extending zones adjacent respective longitudinally extending edges of the membrane strip and a body defining the tentacle anchoring formations to the ground.

15. A method as claimed in any one of claims 13 to 14 inclusive, which includes providing a tunnel or shelter over the membrane strip and the tentacle anchoring formations.

## Patentansprüche

1. Kombination aus Verankerung für mit Tentakeln versehene Pflanzen und Bodenabdeckung zum Verbessern des Ernteertrags mit Tentakeln versehener Pflanzen, wobei die Kombination aus Verankerung für mit Tentakeln versehene Pflanzen, und Bodenabdeckung enthält:
einen wasserundurchlässigen Membranstreifen aus einem Kunststoffmaterial mit einer Seite, die in Gebrauch eine Oberseite ist, auf der eine wachsende mit Tentakeln versehen Pflanze unterstützt werden kann; und
Tentakelverankerungs-Strukturen an der Oberseite des Membranstreifens, die eine mit Tentakeln versehene Pflanze in der Nähe der Kombination aus Verankerung für mit Tentakeln versehene Pflanzen und Bodenabdeckung dabei unterstützen, sich daran zu verankern, wobei es die Tentakelverankerungs-Strukturen Pflanzententakeln gestatten, zwischen den Tentakelverankerungs-Strukturen und dem Membranstreifen zu wachsen.

2. Kombination aus Verankerung für mit Tentakeln versehene Pflanzen und Bodenabdeckung nach Anspruch 1, wobei der Membranstreifen eine Dicke zwischen ungefähr 15 µm und ungefähr 40 µm sowie eine Länge von wenigstens 500 m hat.

3. Kombination aus Verankerung für mit Tentakeln versehene Pflanzen und Bodenabdeckung nach einem der vorangehenden Ansprüche, wobei der Membranstreifen eine Breite zwischen ungefähr 0,5 m und ungefähr 2,5 m hat.

4. Kombination aus Verankerung für mit Tentakeln versehene Pflanzen und Bodenabdeckung nach einem der vorangehenden Ansprüche, wobei die Tentakelverankerungs-Strukturen durch ein Netz gebildet werden, das sich an der Oberseite des Membranstreifens befindet.

5. Kombination aus Verankerung für mit Tentakeln versehene Pflanzen und Bodenabdeckung nach Anspruch 4, wobei das Netz an dem Membranstreifen an einer Vielzahl beabstandeter Positionen so angebracht ist, dass das Netz in Bereichen, in denen das Netz nicht an dem Membranstreifen angebracht ist, von dem Membranstreifen weg verschoben werden kann.

6. Kombination aus Verankerung für mit Tentakeln versehene Pflanzen und Bodenabdeckung nach einem der vorangehenden Ansprüche, wobei durch den Membranstreifen hindurch wenigstens eine Öffnung zum Aufnehmen einer Pflanze ausgebildet ist.

7. Kombination aus Verankerung für mit Tentakeln versehene Pflanzen und Bodenabdeckung nach einem der vorangehenden Ansprüche, die in Form einer Rolle vorliegt und eine Lage enthält, die aus dem Membranstreifen besteht, sowie eine weitere Lage enthält, die aus den Tentakelverankerungs-Strukturen besteht.

8. Verfahren zum Verbessern des Ernteertrags für mit Tentakeln versehene Pflanzen durch Bereitstellen von Tentakelverankerungs-Strukturen für die mit Tentakeln versehenen Pflanzen, wobei das Verfahren einschließt:
Verlegen einer Kombination aus Verankerung für mit Tentakeln versehene Pflanzen und Bodenabdeckung nach einem der vorangehenden Ansprüche auf einem Bodenstreifen;
Befestigen der Kombination aus Verankerung für mit Tentakeln versehene Pflanzen und Bodenabdeckung an dem Boden; und
Pflanzen mit Tentakeln versehener Pflanzen oder ihrer Samen durch Öffnungen in dem Membranstreifen hindurch, so dass sich mit Tentakeln versehene Pflanzen, die durch Öffnungen hindurchwachsen, an den Tentakelverankerungs-Strukturen an der Oberseite des Membranstreifens verankern können.

9. Verfahren nach Anspruch 8, wobei Verlegen der Kombination aus Verankerung für mit Tentakeln versehenen Pflanzen und Bodenabdeckung Abrollen des Membranstreifens und der Tentakelverankerungs-Strukturen von einer Rolle einschließt, die eine Lage des Membranstreifens und eine Lage der Tentakelverankerungs-Strukturen enthält.

10. Verfahren nach Anspruch 8 oder Anspruch 9, wobei Befestigen der Bodenabdeckung an dem Boden Befestigen sich in Längsrichtung erstreckender Zonen, die an jeweilige sich in Längsrichtung erstreckende Ränder der Kombination aus Verankerung für mit Tentakeln versehene Pflanzen und Bodenabdeckung angrenzen, an dem Boden einschließt.

11. Verfahren nach einem der Ansprüche 8 bis einschließlich 10, das Schaffen eines Tunnels oder einer Schutzabdeckung über der Kombination aus Verankerung für mit Tentakeln versehene Pflanzen und Bodenabdeckung einschließt.

12. Verfahren zum Verbessern des Enteertrags für mit Tentakeln versehene Pflanzen durch Bereitstellen von Tentakelverankerungs-Strukturen für die mit Tentakeln versehenen Pflanzen, wobei das Verfahren einschließt:
Verlegen eines Membranstreifens aus einem Kunststoffmaterial mit einer Seite, die in Gebrauch eine obere Seite ist, auf einem Bodenstreifen;
Verlegen von Tentakelverankerungs-Strukturen auf der Oberseite des Membranstreifens;
Befestigen des Membranstreifens und der Tentakelverankerungs-Strukturen an dem Boden; und
Pflanzen mit Tentakeln versehener Pflanzen oder ihrer Samen durch Öffnungen in dem Membranstreifen hindurch, so dass sich mit Tentakeln versehene Pflanzen, die durch die Öffnungen hindurchwachsen, an den Tentakelverankerungs-Strukturen an der Oberseite des Membranstreifens verankern können.

13. Verfahren nach Anspruch 12, das Bereitstellen einer Rolle, die eine Lage des Membranstreifens und eine Lage von Tentakelverankerungs-Strukturen enthält, und gleichzeitiges Abrollen des Membranstreifens sowie der Tentakelverankerungs-Strukturen zum gleichzeitigen Verlegen derselben auf dem Boden einschließt.

14. Verfahren nach Anspruch 12 oder Anspruch 13, wobei Befestigen des Membranstreifens und der Tentakelverankerungs-Strukturen an dem Boden Befestigen sich in Längsrichtung erstreckender Zonen, die an jeweilige sich in Längsrichtung erstreckende Ränder des Membranstreifens angrenzen, und eines Körpers, der die Tentakelverankerungs-Strukturen aufweist, an dem Boden einschließt.

15. Verfahren nach einem der Ansprüche 13 bis einschließlich 14, das Schaffen eines Tunnels oder Schutzabdeckung über dem Membranstreifen und den Tentakelverankerungs-Strukturen einschließt.

## Revendications

1. Ancrage et couvre-sol pour plantes tentaculées pour améliorer la récolte des plantes tentaculées, l'ancrage et couvre-sol pour plantes tentaculées comprenant :
une bande de membrane imperméable à l'eau en matière plastique synthétique ayant un côté qui, à l'usage, est un côté supérieur sur lequel une plante tentaculée qui pousse peut être supportée ; et
des formations d'ancrage tentaculaires sur le côté supérieur de la bande de membrane pour aider une plante tentaculée à proximité de l'ancrage et couvre-sol pour plantes tentaculées pour s'y ancrer elle-même, les formations d'ancrage tentaculaires permettant aux tentacules de la plante de se développer entre les formations d'ancrage tentaculaires et la bande de membrane.

2. Ancrage et couvre-sol pour plantes tentaculées selon la revendication 1, dans lequel la bande de membrane a une épaisseur comprise entre environ 15 µm et environ 40 µm, et une longueur d'au moins 500 m.

3. Ancrage et couvre-sol pour plantes tentaculées selon l'une quelconque des revendications précédentes, dans lequel la bande de membrane a une largeur comprise entre environ 0,5 m et environ 2,5 m.

4. Ancrage et couvre-sol pour plantes tentaculées selon l'une quelconque des revendications précédentes, dans lequel les formations d'ancrage tentaculaires sont définies par un filet positionné sur le côté supérieur de la bande de membrane.

5. Ancrage et couvre-sol pour plantes tentaculées selon la revendication 4, dans lequel le filet est fixé à la bande de membrane à plusieurs emplacements espacés, permettant au filet de pouvoir être déplacé à distance de la bande de membrane, dans des zones dans lesquelles le filet n'est pas fixé à la bande de membrane.

6. Ancrage et couvre-sol pour plantes tentaculées selon l'une quelconque des revendications précédentes, dans lequel la bande de membrane définit au moins une ouverture à travers celle-ci pour recevoir une plante.

7. Ancrage et couvre-sol pour plantes tentaculées selon l'une quelconque des revendications précédentes, qui se présente sous la forme d'un rouleau, comprenant une épaisseur se composant de la bande de membrane et une autre épaisseur se composant des formations d'ancrage tentaculaires.

8. Procédé pour améliorer la récolte des plantes tentaculées en proposant des formations d'ancrage tentaculaires pour les plantes tentaculées, le procédé comprenant les étapes consistant à :
poser un ancrage et couvre-sol pour plantes tentaculées selon l'une quelconque des revendications précédentes sur une bande de sol ;
fixer l'ancrage et couvre-sol pour plantes tentaculées sur le sol ; et
planter les plantes tentaculée ou leur graine à travers des ouvertures dans la bande de membrane de sorte que les plantes tentaculées qui poussent à travers les ouvertures peuvent s'ancrer elles-mêmes sur les formations d'ancrage tentaculaires sur la partie supérieure de la bande de membrane.

9. Procédé selon la revendication 8, dans lequel l'étape consistant à poser l'ancrage et couvre-sol pour plantes tentaculées comprend l'étape consistant à dérouler la bande de membrane et les formations d'ancrage tentaculaires d'un rouleau comprenant une épaisseur de bande de membrane et une épaisseur de formations d'ancrage tentaculaires.

10. Procédé selon la revendication 8 ou la revendication 9, dans lequel l'étape consistant à fixer le couvre-sol sur le sol comprend l'étape consistant à fixer des zones s'étendant longitudinalement adjacentes à des bords s'étendant longitudinalement respectifs de l'ancrage et couvre-sol pour plantes tentaculées, sur le sol.

11. Procédé selon l'une quelconque des revendications 8 à 10 y compris, comprenant l'étape consistant à prévoir un tunnel ou un abri sur l'ancrage et couvre-sol pour plantes tentaculées.

12. Procédé pour améliorer la récolte des plantes tentaculées en proposant des formations d'ancrage tentaculaires pour les plantes tentaculées, le procédé comprenant les étapes consistant à :
poser une bande de membrane en matière plastique synthétique ayant un côté qui, à l'usage, est un côté supérieur sur une bande de sol ;
poser des formations d'ancrage tentaculaires sur le côté supérieur de la bande de membrane ;
fixer la bande de membrane et les formations d'ancrage tentaculaires sur le sol ; et
planter les plantes tentaculées ou leur graine à travers les ouvertures dans la bande de membrane de sorte que les plantes tentaculées qui poussent à travers les ouvertures peuvent s'ancrer elles-mêmes sur les formations d'ancrage tentaculaires sur la partie supérieure de la bande de membrane.

13. Procédé selon la revendication 12, comprenant l'étape consistant à prévoir un rouleau, comprenant une épaisseur de bande de membrane et une épaisseur de formations d'ancrage tentaculaires, et l'étape consistant à dérouler la bande de membrane et les formations d'ancrage tentaculaires simultanément à l'étape consistant à les poser simultanément sur le sol.

14. Procédé selon la revendication 12 ou la revendication 13, dans lequel l'étape consistant à fixer la bande de membrane et les formations d'ancrage tentaculaires sur le sol comprend l'étape consistant à fixer des zones s'étendant longitudinalement adjacentes aux bords respectifs s'étendant longitudinalement de la bande de membrane et un corps définissant les formations d'ancrage tentaculaires, sur le sol.

15. Procédé selon l'une quelconque des revendications 13 à 14 y compris, comprenant l'étape consistant à prévoir un tunnel ou un abri sur la bande de membrane et les formations d'ancrage tentaculaires.
